# EUROPEAN PATENT APPLICATION

(11) **EP 2 590 478 A1**
(43) Date of publication of application: **08.05.2013**
(21) Application number: 12162229.4
(22) Date of filing: 29.03.2012
(51) Int. Cl.: H05B 33/08, G09G 3/34

(54) **LED driving apparatus and method and display apparatus using the LED driving apparatus and method**

(30) Priority: 04.11.2011 KR 20110114649
(71) Applicant: Samsung Electronics Co., Ltd., Suwon-si, Gyeonggi-do, 443-742 (KR)
(72) Inventor: Kim, Tae-sung, Gyeonggi-do (KR); Kang, Jeong-il, Gyeonggi-do (KR); Lee, Yong-joo, Incheon (KR); Lee, Ju-taek, Gyeonggi-do (KR)
(74) Representative: Misselbrook, Paul

(57) **Abstract**

A display apparatus is provided. The display apparatus includes a display panel which displays an image; a light-emitting diode (LED) module which provides backlight to the display panel; an LED driving unit which applies a driving voltage to the LED module; and an LED driving control unit which senses the driving voltage from the LED module and stops an operation of the LED driving unit if the sensed driving voltage is lower than a first reference voltage or higher than a second reference voltage.

## Description

### CROSS-REFERENCE TO RELATED APPLICATION(S)

This application claims priority under 35 U.S.C. § 119 from Korean Patent Application No. 10-2011-0114649, filed on November 4, 2011, in the Korean Intellectual Property Office, the disclosure of which is incorporated herein by reference in its entirety.

### BACKGROUND

### 1. Field

Apparatuses and methods consistent with the exemplary embodiments relate to a light-emitting diode (LED) driving apparatus and method and a display apparatus, and more particularly, to an LED driving apparatus and method, which can provide a backlight for a display apparatus that cannot emit light, and a display apparatus using the LED driving apparatus and method.

### 2. Description of the Related Art

The field of application of light-emitting diodes (LEDs) has gradually expanded due to their excellent performance and long lifetime, and recently, display apparatuses equipped with LEDs as a backlight module have been commercialized.

To utilize LEDs as a backlight module of a display apparatus, various types of driving circuits for controlling the driving of the LEDs have been developed. In the related art, LED driving circuits are largely classified into boost-type and buck-type LED driving circuits.

The boost-type LED driving circuit has a switching transistor connected to a ground source and is thus easily driven. Also, the boost-type LED driving circuit may be configured to realize high-resolution dimming through the addition of another transistor connected to the ground source. However, the boost-type LED driving circuit needs an overvoltage protection (OVP) circuit to prevent the inner circuitry from malfunctioning due to an overvoltage.

A related-art OVP circuit protects circuitry only against an overvoltage resulting from an external factor such as the state of an LED module. Thus, the related-art OVP circuit often fails to provide proper protection from an overvoltage especially when an overvoltage cannot be detected due to any internal factor present in the related-art OVP circuit.

### SUMMARY

Exemplary embodiments address at least the above problems and/or disadvantages and other disadvantages not described above. Also, the exemplary embodiments are not required to overcome the disadvantages described above, and an exemplary embodiment may not overcome any of the problems described above.

The exemplary embodiments provide a light-emitting diode (LED) driving apparatus and method, which can protect internal circuitry against an overvoltage regardless of any internal factor present in an overvoltage protection (OVP) circuit, and a display apparatus using the LED driving apparatus and method.

According to an aspect of the exemplary embodiments, there is provided a display apparatus including: a display panel which displays an image; a light-emitting diode (LED) module which provides backlight to the display panel; an LED driving unit which applies a driving voltage to the LED module; and an LED driving control unit which senses the driving voltage from the LED module and stops an operation of the LED driving unit if the sensed driving voltage is lower than a first reference voltage or higher than a second reference voltage.

The LED driving unit may include an inductor and the LED driving unit may excite the inductor by using a current applied thereto from an external power source, may boost external power from the external power source by using a current induced by the excited inductor, and may apply the boosted power to the LED module as the driving voltage.

The LED driving unit may also include a transistor which is connected to the inductor, and the LED driving unit may turn on or off the transistor in accordance with a level of a current that flows in the LED module, may excite the inductor by using the current applied thereto from the external power source if the transistor is turned on, and may boost the external power and apply the boosted power to the LED module as the driving voltage if the transistor is turned off.

The LED driving control unit may include a first resistor and a second resistor which are connected in series and divide the driving voltage.

If the divided driving voltage is lower than the first reference voltage, the LED driving control unit may determine that at least one of the first resistor and the second resistor has an abnormal connection state, and may shut down external power to the LED driving unit.

If the divided driving voltage is higher than the second reference voltage, the LED driving control unit may determine that an overvoltage higher than a predefined threshold voltage is being applied to the LED module, and may shut down external power to the LED driving unit.

The LED driving control unit may include: a first comparator which compares the sensed driving voltage with the first reference voltage; a second comparator which compares the sensed driving voltage with the second reference voltage; and an OR gate which performs a logic OR operation based on a result of the comparison performed by the first comparator and a result of the comparison performed by the second comparator and a result of the logic OR operation.

According to another aspect of the exemplary embodiments, there is provided an LED driving apparatus to control an LED module, the LED driving apparatus including: an LED driving unit which applies a driving voltage to the LED module; and an LED driving control unit which senses the driving voltage from the LED module and stops an operation of the LED driving unit if the sensed driving voltage is lower than a first reference voltage or higher than a second reference voltage.

The LED driving unit may include an inductor and the LED driving unit may excite the inductor by using a current applied thereto from an external power source, may boost external power from the external power source by using a current induced by the excited inductor, and may apply the boosted power to the LED module as the driving voltage.

The LED driving unit may also include a transistor which is connected to the inductor, and the LED driving unit may turn on or off the transistor in accordance with a level of a current that flows in the LED module, may excite the inductor by using the current applied thereto from the external power source if the transistor is turned on, and may boost the external power and apply the boosted power to the LED module as the driving voltage if the transistor is turned off.

The LED driving control unit may include a first resistor and a second resistor which are connected in series and divide the driving voltage.

If the divided driving voltage is lower than the first reference voltage, the LED driving control unit may determine that at least one of the first resistor and the second resistor has an abnormal connection state, and may shut down external power to the LED driving unit.

If the divided driving voltage is higher than the second reference voltage, the LED driving control unit may determine that an overvoltage higher than a predefined threshold voltage is being applied to the LED module, and may shut down external power to the LED driving unit.

The LED driving control unit may include: a first comparator which compares the sensed driving voltage with the first reference voltage; a second comparator which compares the sensed driving voltage with the second reference voltage; and an OR gate which performs a logic OR operation based on a result of the comparison performed by the first comparator and a result of the comparison performed by the second comparator and a result of the logic OR operation.

According to another aspect of the exemplary embodiments, there is provided an LED driving method to control an LED module, the LED driving method including: applying a driving voltage to the LED module; sensing the driving voltage from the LED module; and shutting down the driving voltage from the LED module if the sensed driving voltage is lower than a first reference voltage or higher than a second reference voltage.

The applying the driving voltage may include exciting an inductor by using a current applied thereto from an external power source, boosting external power from the external power source by using a current induced by the excited inductor, and applying the boosted power to the LED module as the driving voltage.

The applying the driving voltage may include turning on or off a transistor, which is connected to an inductor, in accordance with a level of a current that flows in the LED module, exciting the inductor by using the current applied thereto from the external power source if the transistor is turned on, and boosting the external power and applies the boosted power to the LED module as the driving voltage if the transistor is turned off.

The sensing the driving voltage may include dividing the driving voltage by a first resistor and a second resistor which are connected in series.

The shutting down the driving voltage may include, if the divided driving voltage is lower than the first reference voltage, determining that at least one of the first resistor and the second resistor has an abnormal connection state and shutting down external power to the LED driving unit.

The shutting down the driving voltage may include, if the divided driving voltage is higher than the second reference voltage, determining that an overvoltage higher than a predefined threshold voltage is being applied to the LED module and shutting down external power to the LED driving unit.

As described above, it is possible to effectively sense a driving voltage applied to an LED module and shut down the driving voltage based on the results of the sensing. Therefore, it is possible to prevent any unwanted increase in an output voltage and thus to prevent the breakdown of elements of the LED module and a capacitor.

### BRIEF DESCRIPTION OF THE DRAWINGS

The above and/or other aspects will be more apparent by describing certain exemplary embodiments with reference to the accompanying drawings, in which:

FIG. is a block diagram illustrating a display apparatus according to an exemplary embodiment;

FIG. 2 is a block diagram illustrating an example of a display unit illustrated in FIG. 1, according to an exemplary embodiment;

FIG. 3 is a block diagram illustrating an example of a light-emitting diode (LED) driving apparatus illustrated in FIG. 2, according to an exemplary embodiment;

FIG. 4 is a circuit diagram illustrating another example of the LED driving apparatus according to another exemplary embodiment;

FIG. 5 is a diagram illustrating an example of the operation of an LED driving control unit illustrated in FIG. 4, according to an exemplary embodiment; and

FIG. 6 is a flowchart illustrating an LED driving method to control an LED module, according to an exemplary embodiment.

### DETAILED DESCRIPTION OF THE EXEMPLARY EMBODIMENTS

Certain exemplary embodiments will now be described in greater detail with reference to the accompanying drawings.

In the following description, the same drawing reference numerals are used for the same elements even in different drawings. The matters defined in the description, such as detailed construction and elements, are provided to assist in a comprehensive understanding of the exemplary embodiments. Thus, it is apparent that the exemplary embodiments can be carried out without those specifically defined matters. Also, well-known functions or constructions are not described in detail since they would obscure the exemplary embodiments with unnecessary detail.

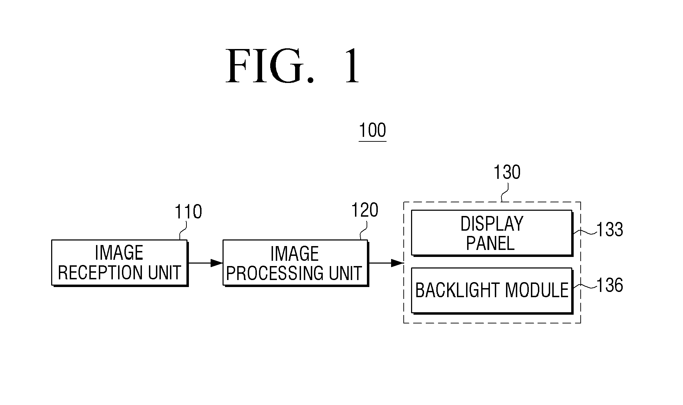

FIG. 1 is a block diagram illustrating a display apparatus according to an exemplary embodiment. Referring to FIG. 1, a display apparatus 100 includes an image reception unit 110, an image processing unit 120, and a display unit 130.

The image reception unit 110 may receive an image signal and image data from a broadcasting station, a satellite, or an external input device either wirelessly or via wired means. For example, the image reception unit 110 may be a tuner for receiving a broadcast signal, or may be an audio/video (A/V) interface for receiving image data from an external imaging device.

The image processing unit 120 may perform signal processing such as, for example, video decoding, video scaling, frame rate conversion (FRC), brightness adjustment, color adjustment and the like, on an image output by the image reception unit 110.

The display unit 130 may display an image input thereto. The display unit 130 includes a display panel 133 and a backlight module 136.

The display panel 133 may display an image obtained by signal processing performed by the image processing unit 130. For example, the display panel 133 may be implemented as a liquid crystal display (LCD) panel or another panel using a backlight.

The backlight module 136 may emit light to the display panel 133 as backlight. Since the display panel 133 cannot emit light, the backlight module 136 may irradiate light onto the display panel 133 as backlight.

The backlight module 136 may include a plurality of light sources. For example, the backlight module 136 may include a plurality of light-emitting diodes (LEDs) that are connected onto a printed circuit board (PCB).

The backlight module 136 may be an edge-type backlight module. For example, the light sources of the backlight module 136 may be arranged along the sides of the display panel 133. Alternatively, the backlight module 136 may be a direct-type backlight module. In this example, the light sources of the backlight module 136 may be evenly distributed over the rear surface of the display panel 133.

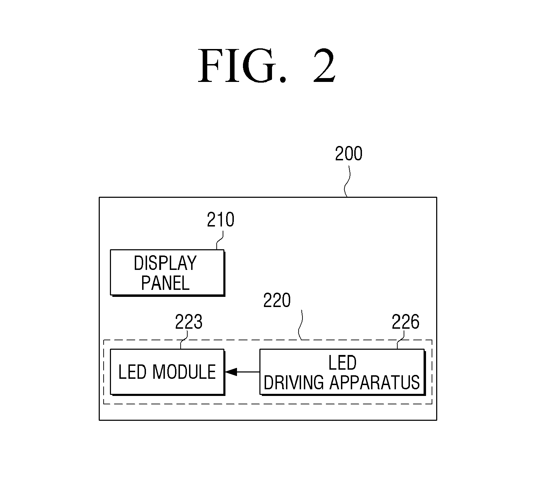

FIG. 2 is a block diagram illustrating an example of the display unit 130 according to an exemplary embodiment. Referring to FIG. 2, a display unit 200 includes a display panel 210 and a backlight module 220. The display panel 210 and the backlight module 220 perform almost the same functions as the display panel 133 and the backlight module 136 illustrated in FIG. 1, and thus will hereinafter be described, focusing mainly on the differences with the display panel 133 and the backlight module 136.

The backlight module 220 includes an LED module 223 and an LED driving apparatus 226.

The LED module 223 may irradiate light onto the display panel 210 as backlight. For example, the LED module 223 may include at least one LED that is connected onto a PCB, and may irradiate light onto the display panel 210 as backlight in accordance with a driving voltage applied thereto by the LED driving apparatus 226. For example, the brightness of the LED module 223 may be determined by an average current that flows into the LED module 223.

The LED driving apparatus 226 may supply power to the LED module 223. For example, the LED driving apparatus 226 may supply a driving voltage to the LED module 223 based on a dimming signal for driving the LED module 223 and the current that flows in the LED module 223. The dimming signal may be a signal for adjusting the brightness and color temperature of the LED module 223 or compensating for temperature based on the duty ratio of a pulse width modulation (PWM) signal.

In response to the dimming signal being on, the LED driving apparatus 226 may excite an inductor by using a current applied thereto from an external power source, may boost external power from the external power source by using a current induced by the excited inductor and may apply the boosted power to the LED module 223 as a driving voltage.

The LED driving apparatus 226 may include a boost-type LED driving circuit, and may control the output current of the LED module 223 by using a peak current control method.

For example, the boost-type LED driving circuit may be implemented as a transistor, an inductor, a capacitor, a diode, or the like, and may boost external power to a required driving power level for the LED module 223 and may apply the boosted power to the LED module 223, which is connected to the boost-type LED driving circuit in parallel.

In a case in which a transistor is turned off when the dimming signal is on, the boost-type LED driving circuit may excite the inductor by using the external power source, and may provide a driving voltage to the LED module 223 by using the energy stored in a capacitor. Alternatively, in a case in which the transistor is turned on when the dimming signal is on, the boost-type LED driving circuit may boost external power by using a current induced by the excited inductor, and may apply the boosted power to the LED module 223 as a driving voltage.

In this manner, the boost-type driving circuit may control a static voltage and a static current to flow into the LED module 223.

A related art boost-type LED driving circuit includes an overvoltage protection (OVP) circuit for preventing an overvoltage from being applied into an LED module. The OVP circuit may determine whether an LED module is open and may protect the LED module against an overvoltage in a case where the LED module is open.

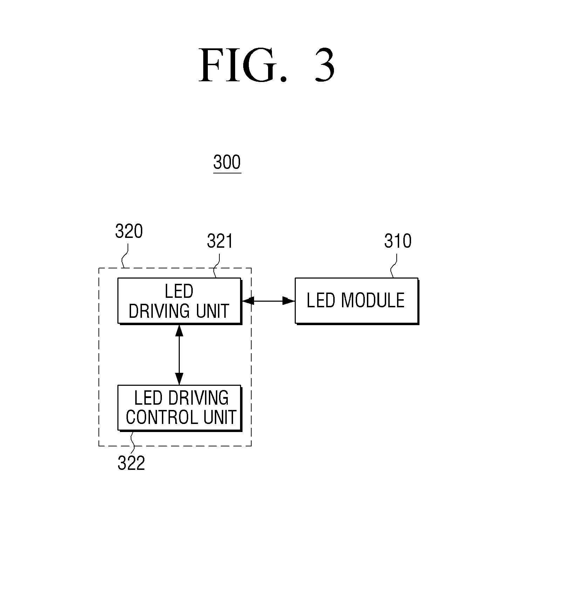

In the related art, in a case in which an OVP circuit is damaged and thus cannot properly detect an overvoltage situation, there is no way to protect internal circuitry against an overvoltage. However, according to the present exemplary embodiments, it is possible to effectively protect internal circuitry against an overvoltage even in a case in which an OVP circuit cannot properly detect an overvoltage situation due to e any internal factors present in the OVP circuit. An LED driving apparatus according to an exemplary embodiment will hereinafter be described with reference to FIG. 3.

FIG. 3 is a block diagram illustrating an LED driving apparatus according to an exemplary embodiment. Referring to FIG. 3, an LED driving apparatus 300 includes an LED driving unit 321 and an LED driving control unit 322. For convenience, an LED module 310, which may be included in a backlight module 300, is also illustrated in FIG. 3.

The LED driving unit 321 may apply a driving voltage to the LED module 310. The LED driving unit 321 may boost external power, and may supply the boosted power to the LED module 310. The LED driving unit 321 may control a static current to be applied to the LED module 310 by adjusting a current that flows in the LED module 310 in accordance with a dimming signal.

For example, the LED driving unit 321 may be implemented as a boost converter including an inductor, a capacitor, a transistor, and a diode.

The LED driving unit 321 may excite an inductor by using a current applied thereto from an external power source, may boost external power from the external power source by using a current induced by the excited inductor, and may apply the boosted power to the LED module 310 as a driving voltage. The LED driving unit 321 may include a transistor that is connected to the inductor, and may turn on or off the transistor in accordance with the level of a current that flows in the LED module 310. In response to the transistor being turned on, the LED driving unit 321 may excite the inductor by using a current applied thereto from the external power source. Alternatively, in response to the transistor being turned off, the LED driving unit 321 may boost the external power from the external power source by using the current induced by the excited inductor, and may thus provide a driving voltage to the LED module 310.

The LED driving control unit 322 may sense a driving voltage applied to the LED module 310, and may stop the operation of the LED driving unit 321 in accordance with the level of the sensed driving voltage. For example, the LED driving control unit 322 may stop the operation of the LED driving unit 321 in a case in which the sensed driving voltage is lower than a first reference level or higher than a second reference voltage.

The LED driving control unit 322 may include a first resistor and a second resistor which are connected in series and divide a driving voltage applied to the LED module 310.

In a case in which the divided driving voltage is lower than the first reference voltage, the LED driving control unit 322 may determine that at least one of the first resistor and the second resistor has an abnormal connection state, and may shut down the external power to the LED driving unit 321.

Alternatively, in a case in which the divided driving voltage is higher than the second reference voltage, the LED driving control unit 322 may determine that an overvoltage higher than a predefined threshold voltage is being applied to the LED module 310, and may shut down the external power to the LED driving unit 321.

The LED driving control unit 322 may operate as an OVP circuit. That is, in a case in which the LED module 310 is open, a driving voltage applied to the LED module 310 to apply a static current to the LED module 310 may gradually increase. In this case, if a sensed driving voltage is higher than the second reference voltage, the LED driving control unit 322 may shut down the external power to the LED driving unit 321, thereby preventing an overvoltage from being applied to the LED module 310.

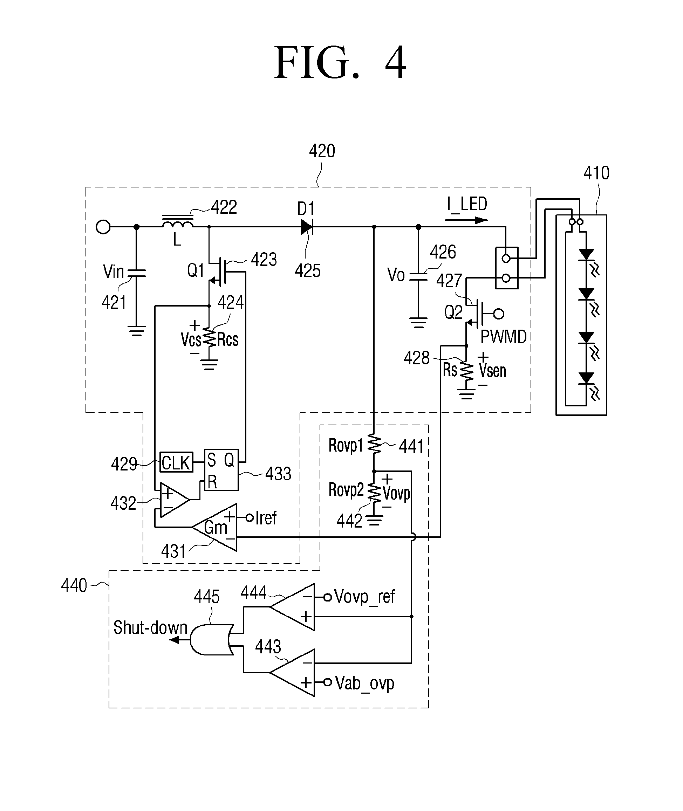

The LED driving apparatus 300 may determine whether the LED driving control unit 322, which operates as an OVP circuit, is in an abnormal state and may shut down the external power to the LED driving unit 321 if the LED driving control unit 322 is determined to be in an abnormal state. The operation of the LED driving apparatus 300 will hereinafter be described in further detail with reference to FIG. 4.

FIG. 4 is a circuit diagram illustrating an LED driving apparatus according to another exemplary embodiment, i.e., an example of the LED driving apparatus 300 illustrated in FIG. 3.

Referring to FIG. 4, an LED driving unit 420, which is a boost-type converter, may supply driving power to an LED module 410 by boosting external power, and may control a static current to be applied to the LED module 410 by adjusting a flow that flows in the LED module 410 in accordance with a dimming signal. The LED driving unit 420 includes a first capacitor 421, an inductor 422, a first transistor 423, a third resistor 424, a diode 425, a second capacitor 426, a second transistor 427, a fourth resistor 428, an oscillator 429, a third comparator 431, a fourth comparator 432, and an RS flipflop 433.

The first capacitor 421 may be connected to an external power source in parallel, may store external power Vi from the external power source, and may provide a driving voltage to the LED module 410. A first end of the first capacitor 421 may be connected to the inductor 422, and a second end of the first capacitor 421 may be grounded.

In response to the first transistor 423 being turned on, the inductor 422 may be excited by a current applied thereto from the external power source. In response to the first transistor 423 being turned off, the inductor 422 may provide a driving voltage to the LED module 410 along with the first capacitor 421. A first end of the inductor 422 may be connected to the first end of the first capacitor 421, and a second end of the inductor 422 may be commonly connected to a drain of the first capacitor 423 and an anode of the diode 425.

By being turned on or off, the first transistor 423 may excite the inductor 422, may boost external power along with the first capacitor 421 and the inductor 422, and may provide the boosted power to the LED module 410. A drain of the first transistor 423 may be commonly connected to the second end of the inductor 422 and the anode of the diode 425, a gate of the first transistor 423 may be connected to the output of the RS flipflop 433, and a source of the first transistor 423 may be connected to a first end of the third resistor 424.

The first end of the third resistor 424 may be connected to the source of the first transistor 423, and a second end of the third resistor 424 may be grounded.

The anode of the diode 425 may be commonly connected to the second end of the inductor 422 and the drain of the first transistor 423, and a cathode of the diode 425 may be commonly connected to an LED driving control unit 440, a first end of the second capacitor 426, and an anode of the LED module 410.

The second transistor 427 may adjust the current that flows in the LED module 410 by being switched on or off in accordance with a dimming signal. A drain of the second transistor 427 may be connected to a cathode of the LED module 410, and a source of the second transistor 427 may be commonly connected to the fourth resistor 428 and an inverting terminal of the third comparator 431. The second transistor 427 may receive the dimming signal via a gate thereof.

A first end of the fourth resistor 428 may be commonly connected to the source of the second transistor 427 and the inverting terminal of the third comparator 431, and a second end of the fourth resistor 428 may be grounded.

The oscillator 429 may periodically turn on the first transistor 423 by inputting a signal with a uniform frequency to the RS flipflop 433 as a set input.

The third comparator 431 may receive a voltage corresponding to a reference current Iref via a non-inverting terminal thereof. The inverting terminal of the third comparator 431 may be connected to the first end of the fourth resistor 428, and may receive a voltage Vsen applied to the fourth resistor 428. The reference current Iref may be set to determine the brightness of the LED module 410.

The third comparator 431 may amplify the difference between a voltage received via the non-inverting terminal of the third comparator 431 and a voltage received via the inverting terminal of the third comparator 431, and may output the amplified voltage to an inverting terminal of the fourth comparator 432

A non-inverting terminal of the fourth comparator 432 may be connected to the first end of the third resistor 424. The fourth comparator 432 may receive a voltage applied to the third resistor 424 via the non-inverting terminal thereof and may receive the output of the third comparator 431 via the inverting terminal thereof. If the voltage Vcs is higher than the output of the third comparator 431, the fourth comparator 432 may output a high signal to the RS flipflop 433 as a reset input.

The RS flipflop 433 may receive the output of the fourth comparator 432 as the reset input, and may receive the output of the oscillator 429 as the set input. The RS flipflop 433 may output a signal to the gate of the first transistor 423 and may thus control the first transistor 423 to be turned on or off.

The LED driving control unit 440 may sense a driving voltage applied to the LED module 410, and may shut down the external power to the LED driving unit 420 in accordance with the level of the detected driving voltage.

For example, if the sensed driving voltage is higher than a second reference voltage Vovp_ref, the LED driving control unit 440 may determine that the LED module 410 is open and may shut down the external power to the LED module 410. Alternatively, if the sensed driving voltage is lower than a first reference voltage Vab_ovp, the LED driving control unit 440 may determine that at least one of a first resistor 441 and a second resistor 442 has an abnormal connection state, and may shut down the external power to the LED driving unit 420.

The LED driving control unit 440 includes the first resistor 441, the second resistor 442, a first comparator 443, a second comparator 444, and an OR gate 445.

A first end of the first resistor 441 may be commonly connected to the cathode of the diode 425, the first end of the second capacitor 426 and the anode of the LED module 410, and a second end of the first resistor 441 may be commonly connected to the first end of the second resistor 442 and the LED driving control unit 440.

A first end of the second resistor 442 may be commonly connected to the second end of the first resistor 441 and the LED driving control unit 440, and a second end of the second resistor 442 may be grounded.

The first comparator 443 may compare a divided voltage, which is obtained by dividing a driving voltage applied to the LED module 410 with the use of the first resistor 441 and the second resistor 442, with the first reference voltage Vab_ovp.

The first comparator 443 may receive the first reference voltage Vab_ovp via the non-inverting terminal thereof, and may receive a voltage Vovp applied to the second resistor 442 via the inverting terminal thereof. The first comparator 443 may compare the voltage Vovp with the first reference voltage Vab_ovp, and may output a high signal to the OR gate 445 if the voltage Vovp is lower than the first reference voltage Vab_ovp.

The second comparator 444 may compare the divided voltage with the second reference voltage Vovp_ref.

The second comparator 444 may receive the voltage Vovp via the non-inverting terminal thereof, and may receive the second reference voltage Vovp_ref via the inverting terminal thereof. The second comparator 444 may compare the voltage Vovp with the second reference voltage Vovp_ref, and may output a high signal to the OR gate 445 if the voltage Vovp is higher than the second reference voltage Vovp_ref.

The first reference voltage Vab_ovp may be lower than the second reference voltage Vab_ovp.

The OR gate 445 may perform a logic OR operation on the high signal output by the first comparator 443 and the high signal output by the second comparator 444. For example, in response to at least one of the first comparator 443 and the second comparator 444 outputting a high signal, the OR gate 445 may output a shutdown signal so that the external power to the LED driving unit 420 may be cut off.

The operation of the LED driving apparatus illustrated in FIG. 4 will hereinafter be described.

The LED driving unit 420, which is a boost-type converter, may boost external power and may provide the boosted power to the LED module 410 as a driving voltage. For example, the LED driving unit 420 may excite the inductor 422 by using the external power, may boost the external power by using a current induced by the inductor 422, and may provide the driving voltage to the LED module 410 as the driving voltage.

The LED driving unit 420 may compare a current that flows in the LED module 410 with the reference current Iref, and may perform control based on the results of the comparison such that a static current can be supplied into the LED module 410. For example, the LED driving unit 420 may amplify the difference between the voltage Vsen, which is applied to the fourth resistor 428 via the third comparator 431, and the voltage corresponding to the reference current Iref, may compare the amplified voltage with the voltage Vsc, which is applied to the third resistor 424 via the fourth comparator 432, and may perform control based on the results of the comparison such that a static current may flow into the LED module 410. This operation of the LED driving unit 420 is almost the same as the operation of a related-art boost-type converter, and thus, a detailed description thereof will be omitted.

The LED driving apparatus illustrated in FIG. 4 may determine whether an OVP circuit is in an abnormal state, and may thus be able to effectively protect the internal circuitry against an overvoltage.

That is, when the LED module 410 is open, the LED driving apparatus illustrated in FIG. 4 may continue to supply a driving voltage to the LED module 410 to apply a static current to the LED module 410. Accordingly, an output voltage Vo may continue to increase.

To prevent the output voltage Vo from continuing to increase, the LED driving control unit 440 may sense a voltage applied to the LED module 410, and may shut down the external power to the LED driving unit 420 in accordance with the level of the sensed voltage.

The LED driving control unit 440 may divide a driving voltage applied to the LED module 410 by using the first resistor 441 and the second resistor 442, and may output a shutdown signal if the voltage Vovp, which is obtained by dividing the driving voltage, is higher than the second reference voltage Vovp_ref. In this manner, it is possible to shut down the external power to the LED driving unit 420 and thus to prevent an overvoltage higher than a predefined threshold voltage from being applied to the LED module 410.

The LED driving control unit 440 may determine whether at least one of the first resistor 441 and the second resistor 442 has an abnormal connection state. The abnormal connection state may indicate, but is not limited to, a case in which the first resistor 441 is open or the second resistor 442 is short-circuited.

That is, in response to the first resistor 441 being open or the second resistor 442 being short-circuited, the voltage Vovp, which is applied to the second resistor 442, may become 0V, and the LED driving control unit 440 may not be able to precisely sense the driving voltage applied to the LED module 410. Accordingly, the LED driving control unit 440 may not be able to properly operate as an OVP circuit.

To address this problem, the LED driving control unit 440 may be configured to shut down the external power to the LED driving unit 420 and thus prevent an overvoltage from being applied to the LED module 410 in a case in which at least one of the first resistor 441 and the second resistor 442 has an abnormal connection state.

For example, if the voltage Vovp, which is obtained by dividing the driving voltage applied to the LED module 410, is lower than the first reference voltage Vab_ovp, the LED driving control unit 440 may output a shutdown signal. Accordingly, the external power to the LED driving unit 420 may be shut down so that an overvoltage may be prevented from being applied to the LED module 410 in a case in which at least one of the first resistor 441 and the second resistor 442 has an abnormal connection state.

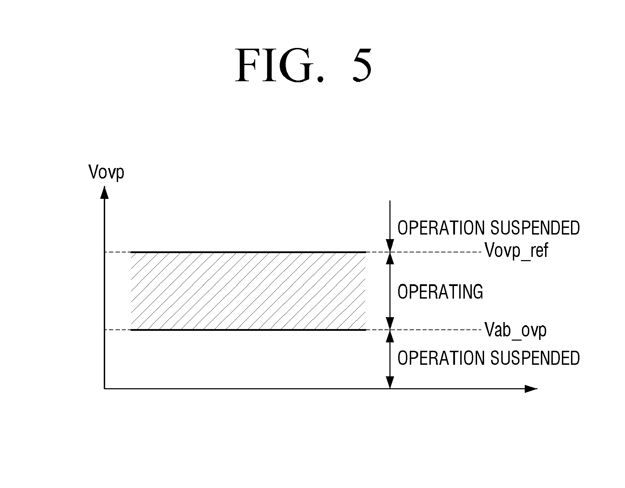

FIG. 5 is a diagram illustrating an example of the LED driving control unit 440 illustrated in FIG. 4, according to an exemplary embodiment. Referring to FIG. 5, the LED driving control unit 440 may drive the LED driving unit 420 only when a voltage obtained by dividing the driving voltage applied to the LED module 410 is higher than the first reference voltage Vab_ovp and lower than the second reference voltage Vovp_ref. That is, if the voltage obtained by dividing the driving voltage applied to the LED module 410 is lower than the first reference voltage Vab_ovp or higher than the second reference voltage Vovp_ref, the LED driving control unit 440 may shut down the external power to the LED driving unit 420 and may thus protect the internal circuitry of the LED module 410 and the internal circuitry of the LED driving unit 440 against an overvoltage.

When at least one of the first resistor 441 and the second resistor 442 has an abnormal connection state, the voltage sensed from the second resistor 442 may be 0V, and thus, the first reference voltage Vab_ovp may be set to a level slightly higher than 0V in consideration of noise.

In the case of a boost-type converter, if lower external power than that set in the specification is applied, an input current higher than a reference current for providing uniform output power may flow into an LED driving apparatus so that the LED driving apparatus may break down.

On the other hand, according to the present exemplary embodiment, the external power to the LED driving unit 420 may be shut down if the voltage sensed from the second resistor 442 is lower than the first reference voltage Vab_ovp.

That is, in a case in which at least one of the first resistor 441 and the second resistor 442 has a normal connection state, the LED driving control unit 440 may operate as an undervoltage lock-out (UVLO) circuit in accordance with the first reference voltage Vab_ovp.

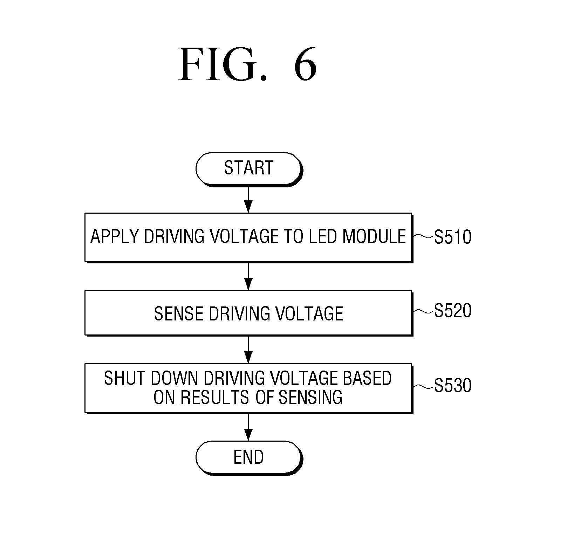

FIG. 6 is a flowchart illustrating an LED driving method to drive an LED module, according to an exemplary embodiment.

Referring to FIG. 6, in operation S510, a driving voltage may be applied to an LED module. For example, according to a boost-type method, external power may be boosted, and the boosted power may be applied to the LED module as the driving voltage.

More specifically, an inductor may be excited by using a current applied from an external power source, and the external power may be boosted by using a current induced by the inductor. The boosted power may be applied to the LED module as the driving voltage. The inductor may be connected to a transistor, and may turn on or off the transistor in accordance with the level of a current that flows in the LED module. In response to the transistor being turned on, the inductor may be excited by using the current applied from the external power source. Alternatively, in response to the transistor being turned off, the external power may be boosted by using the current induced by the inductor, and the boosted power may be applied to the LED module as the driving voltage.

In operation S520, the driving voltage may be sensed from the LED module.

For example, the driving voltage may be sensed by dividing the dividing voltage with the use of a first resistor and a second resistor that are connected in series.

In operation S530, the driving voltage may be shut down based on the results of the sensing performed in operation S520.

For example, if the divided driving voltage is lower than a first reference voltage, it may be determined that at least one of the first resistor and the second resistor has an abnormal connection state, and the driving voltage may be shut down.

Alternatively, if the divided driving voltage is higher than a second reference voltage, it may be determined that an overvoltage higher than a predefined threshold voltage is being applied to the LED module, and the driving voltage may be shut down.

For example, the first reference voltage may be lower than the second reference voltage. The driving voltage may be shut down by shutting down the external power to the LED module.

The foregoing exemplary embodiments and advantages are merely exemplary and are not to be construed as limiting. The present teaching can be readily applied to other types of apparatuses. Also, the description of the exemplary embodiments is intended to be illustrative, and not to limit the scope of the claims, and many alternatives, modifications, and variations will be apparent to those skilled in the art.

## Claims

1. A display apparatus comprising:
a display panel which displays an image;
a light-emitting diode (LED) module which provides backlight to the display panel;
an LED driving unit which applies a driving voltage to the LED module; and
an LED driving control unit which senses the driving voltage from the LED module and stops an operation of the LED driving unit if the sensed driving voltage is lower than a first reference voltage or higher than a second reference voltage.

2. The display apparatus of claim 1, wherein the LED driving unit comprises an inductor and the LED driving unit excites the inductor by using a current applied to the inductor from an external power source, boosts external power from the external power source by using a current induced by the excited inductor, and applies the boosted power to the LED module as the driving voltage.

3. The display apparatus of claim 2, wherein the LED driving unit further comprises a transistor which is connected to the inductor, and the LED driving unit turns on or off the transistor in accordance with a level of a current that flows in the LED module, excites the inductor by using the current applied to the inductor from the external power source if the transistor is turned on, and boosts the external power and applies the boosted power to the LED module as the driving voltage if the transistor is turned off.

4. The display apparatus of any one of claims 1 to 3, wherein the LED driving control unit comprises a first resistor and a second resistor which are connected in series and divide the driving voltage.

5. The display apparatus of claim 4, wherein, if the divided driving voltage is lower than the first reference voltage, the LED driving control unit determines that at least one of the first resistor and the second resistor has an abnormal connection state, and shuts down external power to the LED driving unit.

6. The display apparatus of claim 4 or 5, wherein, if the divided driving voltage is higher than the second reference voltage, the LED driving control unit determines that an overvoltage higher than a predefined threshold voltage is being applied to the LED module, and shuts down external power to the LED driving unit.

7. The display apparatus of any one of claims 1 to 6, wherein the LED driving control unit comprises:
a first comparator which compares the sensed driving voltage with the first reference voltage;
a second comparator which compares the sensed driving voltage with the second reference voltage; and
an OR gate which performs a logic OR operation on a result of the comparison performed by the first comparator and a result of the comparison performed by the second comparator and a result of the logic OR operation.

8. An LED driving method to control an LED module, the LED driving method comprising:
applying a driving voltage to the LED module;
sensing the driving voltage from the LED module; and
shutting down the driving voltage from the LED module if the sensed driving voltage is lower than a first reference voltage or higher than a second reference voltage.

9. The LED driving method of claim 8, wherein the applying the driving voltage comprises exciting an inductor by using a current applied to the inductor from an external power source, boosting external power from the external power source by using a current induced by the excited inductor, and applying the boosted power to the LED module as the driving voltage.

10. The LED driving method of claim 8 or 9, wherein the inductor is connected to a transistor and the applying the driving voltage comprises turning on or off a transistor, which is connected to an inductor, in accordance with a level of a current that flows in the LED module, exciting the inductor by using the current applied to the inductor from the external power source if the transistor is turned on, and boosting the external power and applies the boosted power to the LED module as the driving voltage if the transistor is turned off.

11. The LED driving method of any one of claims 8 to 10, wherein the sensing the driving voltage comprises dividing the driving voltage by a first resistor and a second resistor which are connected in series.

12. The LED driving method of claim 11, wherein the shutting down the driving voltage comprises, if the divided driving voltage is lower than the first reference voltage, determining that at least one of the first resistor and the second resistor has an abnormal connection state and shutting down external power to the LED driving unit.

13. The LED driving method of claim 11 or 12, wherein the shutting down the driving voltage comprises, if the divided driving voltage is higher than the second reference voltage, determining that an overvoltage higher than a predefined threshold voltage is being applied to the LED module and shutting down external power to the LED driving unit.
